# EUROPEAN PATENT APPLICATION

(11) **EP 4 353 875 A2**
(43) Date of publication of application: **17.04.2024**
(21) Application number: 23203653.3
(22) Date of filing: 13.10.2023
(51) Int. Cl.: C25B 1/04, C25B 15/02, C25B 15/08

(54) **SHUTDOWN METHODS FOR OXYGEN GENERATION SYSTEMS**

(30) Priority: 14.10.2022 US 202217966433
(71) Applicant: Hamilton Sundstrand Space Systems International, Inc., Windsor Locks, CT 06096 (US)
(72) Inventor: WU, Hailing, Glastonbury, 06033 (US); BLASKEWICZ, Luke, Monroe, CT (US); SCHMIDT, Walter T., Marlborough, CT (US); ROY, Robert J., West Springfield, MA, 01089 (US); BAKER, Phillip, Colchester, CT (US); KULP, Galen W., Manchester, CT (US)
(74) Representative: Dehns

(57) **Abstract**

In accordance with at least one aspect of this disclosure, a method includes flushing a cell stack (102) for a predetermined amount of time as a function of an amount of combustible gas remaining in the cell stack (102). The method also includes operating a cell stack (102) for a predetermined amount of time, then shutting down the cell stack (102) and ceasing operation of the cell stack (102) for a predetermined amount of time. Flushing occurs after shutting down a cell stack (102) power supply. The method further includes restarting operation of the cell stack (102) after flushing.

## Description

### STATEMENT OF GOVERNMENT RIGHTS

This invention was made with government support under Contract No. NAS 15-10000 awarded by NASA. The government has certain rights in the invention.

### TECHNICAL FIELD

The present disclosure relates to electrolysis-based oxygen generation, and more particularly to methods of shutting down an electrolysis-based oxygen generation system.

### BACKGROUND

Oxygen generation for metabolic use is important to support long-duration manned space missions. A water electrolysis-based oxygen generation system uses electricity to decompose water into oxygen and hydrogen gases. At the system shutdown, flow stops and electrolysis is ceased. Partial pressure differentials exist across the cell stack membrane driving oxygen in the anode side and hydrogen in the cathode side to diffuse across the membrane to their opposite sides, which could potentially form a combustion hazard if an unwanted mixture of hydrogen and oxygen were left uncorrected.

There remains a need in the art for improvements to shutdown procedures for electrolysis-based oxygen generation system, for example in the aerospace industry and maritime industry. This disclosure provides a solution for this need.

### SUMMARY

In accordance with at least one aspect of this disclosure, a method includes flushing a cell stack for a predetermined amount of time as a function of an amount of combustible gas remaining in the cell stack. The method also includes operating the cell stack for a predetermined amount of time, then shutting down the cell stack and ceasing operation of the cell stack for a predetermined amount of time. Flushing occurs after shutting down a cell stack power supply. The method further includes restarting operation of the cell stack after flushing.

Operating the cell stack can include performing water electrolysis to generate oxygen gas and hydrogen gas. In embodiments, flushing the cell stack can include pumping water through the cell stack after shutting down the cell stack power supply.

In embodiments, flushing the cell stack can include purging the cell stack with an inert gas. In certain embodiments, shutting down the cell stack can include stopping a flow of power to the cell stack, while continuing to power a system controller, and stopping a flow of power to one or more valves providing fluid to the cell stack to return the one or more valves to their biased state. In such embodiments, stopping the flow of power to the one or more valves causes a valve controlling a flow of the inert gas to the cell stack to move into its open position to purge the cell stack with the inert gas. In certain embodiments, the inert gas can include nitrogen gas.

In certain embodiments, flushing the cell stack can include performing electrochemical discharge on the cell stack to consume free combustible gas in the cell stack, wherein the combustible gas is or includes hydrogen gas or oxygen gas. In such embodiments, performing electrochemical discharge can include on a first side of the cell stack, catalyzing separation of electrons and protons of hydrogen molecules in the combustible gas, forcing the protons through a membrane to a second side of the cell stack while allowing the electrons to flow around the membrane to the second side of the cell stack, forming an electrical current, and allowing the electrons and the protons to combine with oxygen gas on the second side of the cell stack to produce water.

In certain embodiments, flushing the cell stack can include performing chemical recombination on the cell stack to consume free combustible gas in the cell stack, and the combustible gas can be or include hydrogen gas or oxygen gas. In certain such embodiments, performing chemical recombination can include allowing the hydrogen gas to combine with oxygen gas on both a first side of the cell stack and a second side of the cell stack to produce water.

In accordance with at least one aspect of this disclosure, a system can include a cell stack configured to perform water electrolysis. The cell stack can include an anode and a cathode, one or more conduits configured to supply fluid to the cell stack, a recirculation pump configured to supply water to the cell stack, a controller configured to control operation of one or more portions of the system. The controller can be configured to control one or more of, a flow of power to cell stack, a flow of fluids to the cell stack via the one or more conduits, operation of the recirculation pump.

In certain embodiments, the controller can include computer readable instructions configured to perform a method, the method including controlling the flow of power to the cell stack, controlling the flow of fluids to the cell stack via the one or more conduits, and controlling operation of the recirculation pump for a predetermined amount of time as a function of an amount of combustible gas remaining in the cell stack to flush the cell stack at shut down of the system.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Figs. 1 and 2 are a schematic diagram of an oxygen generating system in accordance with this disclosure, showing oxygen generation and a method of shutting down the oxygen generating system;
Figs. 3 and 4 are a schematic diagram of another oxygen generating system in accordance with this disclosure, showing oxygen generation and a method of shutting down the oxygen generating system.

### DETAILED DESCRIPTION

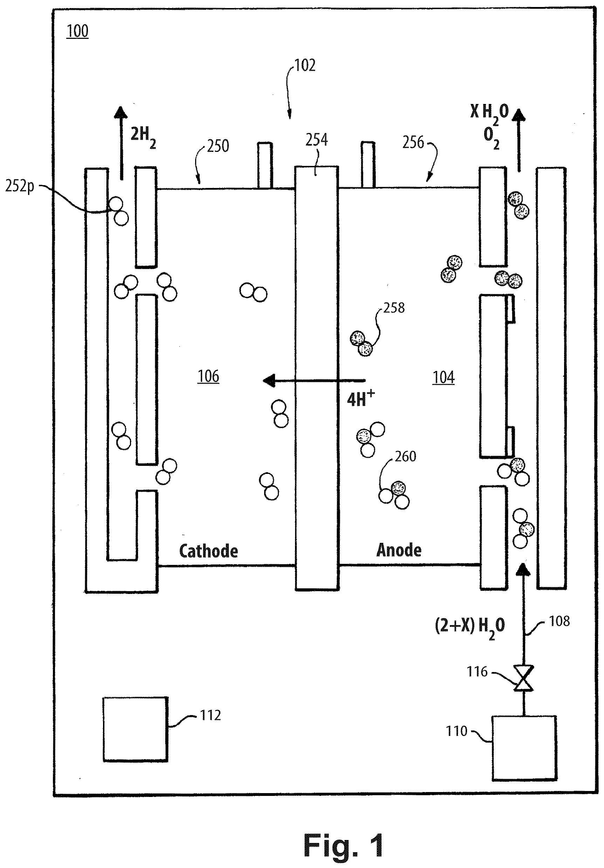

Reference will now be made to the drawings wherein like reference numerals identify similar structural features or aspects of the subject disclosure. For purposes of explanation and illustration, and not limitation, an illustrative view of an embodiment of a system and method in accordance with the disclosure is shown in Fig. 1 and is designated generally by reference character 100.

In accordance with at least one aspect of this disclosure, a system 100 can include a cell stack 102 configured to perform water electrolysis. The cell stack 102 can include an anode 104 and a cathode 106, one or more conduits 108 configured to supply fluid to the cell stack, a recirculation pump 110 configured to supply water to the cell stack 102, and a controller 112 configured to control operation of one or more portions of the system 100. In embodiments, the controller 112 can be configured to control one or more of, a flow of power to the anode 104 and the cathode 106 of the cell stack 102, a flow of fluids to the cell stack 102 via the one or more conduits 108, and/or operation of the recirculation pump 110. In embodiments, the system 100 can be configured for use on or in a spacecraft 114, e.g., travelling to, from, or within outer space or in certain watercraft (e.g., submarines).

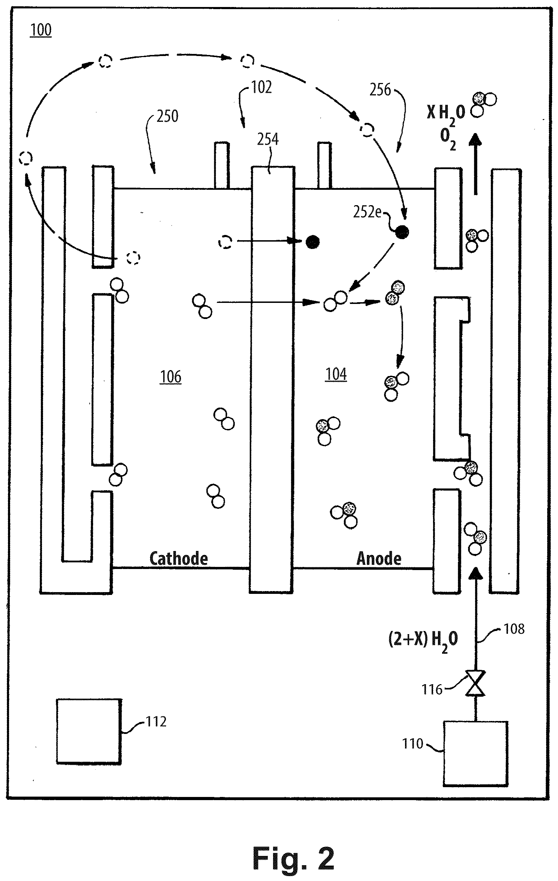

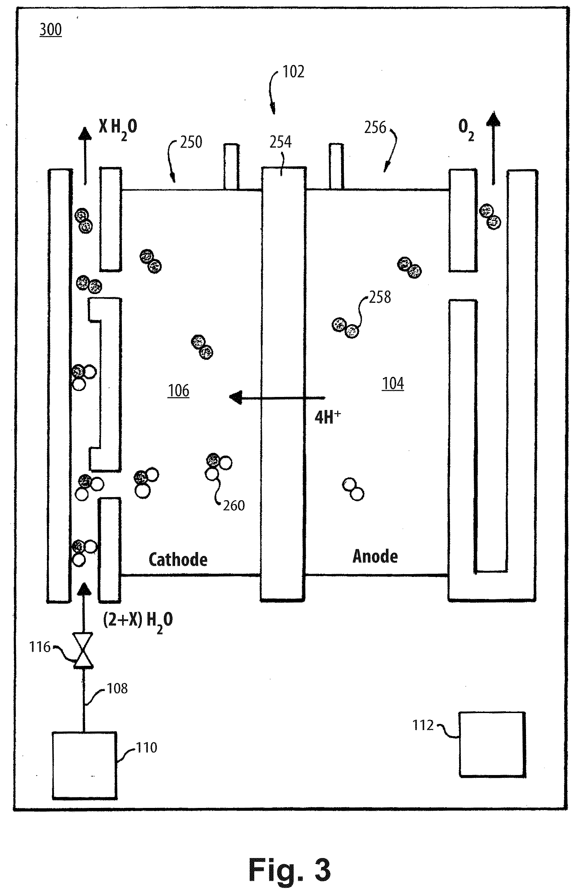

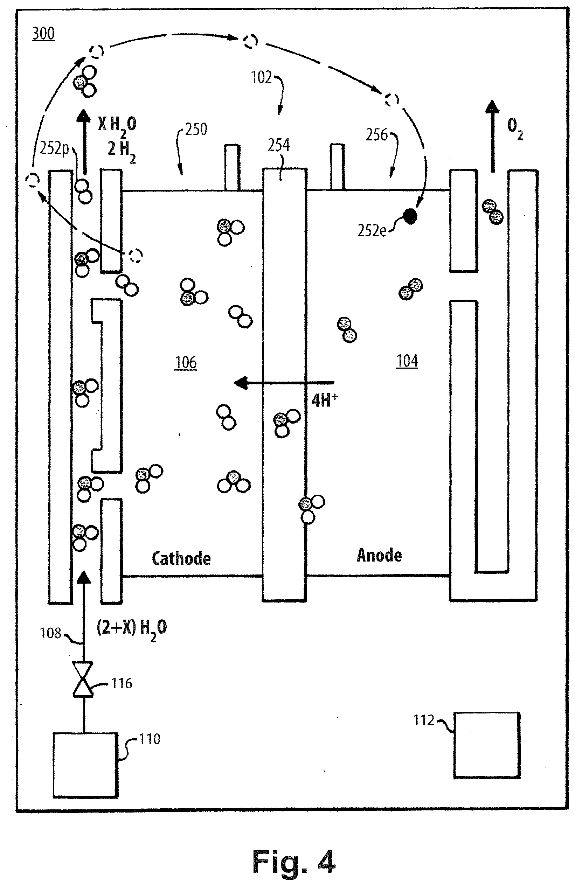

In certain embodiments, the controller 112 can include computer readable instructions configured to perform a method, the method including controlling the flow of power to the anode 104, controlling the flow of fluids to the cell stack 102 via the one or more conduits (e.g., by controlling a state of one or more valves 116 in the conduits 108, or by controlling the pump 110 itself), and controlling operation of the recirculation pump 110 for a predetermined amount of time. The predetermined amount of time can be any suitable time, for example 10 seconds to 1000 seconds. In certain embodiments, the predetermined amount of time can be determined as a function of an amount of combustible gas remaining in the cell stack 102 so that the controller 112 may control the one or more portions of the system 100 to flush the cell stack 102 at shut down of the system 100. In certain embodiments, as shown in Figs. 1 and 2, where the system 100 is an anode-feed system, the remaining combustible gas can be oxygen gas. In certain embodiments, as shown in Figs. 3 and 4, where the system is a cathode-feed system 300, the remaining combustible gas is hydrogen gas.

In accordance with at least one aspect of this disclosure, a method, e.g., a method performed at least in part by the controller 112, can include operating a cell stack (e.g., cell stack 102 in either system 100 or 300) for a first predetermined amount of time. Operating the cell stack can include, performing water electrolysis to generate oxygen gas and hydrogen gas. The first predetermined amount of time can be any suitable amount of time required for generating sufficient oxygen and hydrogen gas, e.g., for use by the spacecraft 114 or crew on board. The method can include, after operating the cell stack for the first predetermined amount of time, shutting down the cell stack and ceasing operation of the cell stack for a second predetermined amount of time. As used herein, shutting down the cell stack includes shutting down a power supply to the cell stack. The second predetermined amount of time can be any suitable amount of time for performing maintenance or diagnostics on the cell stack.

The method includes flushing the cell stack for a third predetermined amount of time, the third predetermined amount of time being determined as a function of an amount of combustible gas remaining in the cell stack (e.g., either hydrogen or oxygen as discussed above). For example, the third predetermined amount of time can be directly correlated to the amount of combustible remaining in the cell stack and may change for each flush. Flushing the cell stack can occur after shutting down the cell stack power supply so that the cell stack is left in a safer and more suitable condition for maintenance when ultimately shut down. The method further includes restarting operation of the cell stack after flushing.

In certain embodiments, flushing the cell stack can include continuously pumping water through the cell stack after shutting down the cell stack power supply. In embodiments, the water for pumping through the cell stack can be recirculated water used for performing the water electrolysis.

In embodiments, flushing the cell stack can include purging the cell stack with an inert gas. In certain embodiments, shutting down the cell stack can include stopping a flow of power to the cell stack, while continuing to power the controller. Shutting down the cell stack can come before shutting down the entire system 100, 300. After shutting down the cell stack (e.g., the power supply), shutting down the system 100, 300 can include stopping a flow of power to one or more valves providing fluid to the cell stack to return the one or more valves to their biased state, or shutting down the system 100, 300 can include shutting down the pump. In such embodiments, stopping the flow of power to the one or more valves can cause a valve controlling a flow of the inert gas to the cell stack to move into its biased state (e.g., an open position) to purge the cell stack with the inert gas. In certain embodiments, the inert gas can include nitrogen gas.

In certain embodiments, flushing the cell stack can include performing electrochemical discharge on the cell stack to consume free combustible gas in the cell stack, e.g., as shown in Fig. 2. In such embodiments, performing electrochemical discharge can include, on a first side 250 of the cell stack 102, catalyzing separation of electrons 252e and protons 252p of hydrogen molecules 252 in the hydrogen gas, forcing the protons 252p through a membrane 254 to a second side 256 of the cell stack 102, as denoted by the dotted arrow, while allowing the electrons 252e to flow around the membrane 254 to the second side 256 of the cell stack 102, forming an electrical current. On the second side 256 of the cell stack 102 the electrons 252e and the protons 252p can then combine with oxygen gas 258 already on the second side 256 of the cell stack 102 to produce water 260.

In certain embodiments, flushing the cell stack 102 can include performing chemical recombination on the cell stack 102 to consume free hydrogen gas in the cell stack. In certain such embodiments, performing chemical recombination can include allowing the hydrogen gas 252 to combine with oxygen 258 gas on both a first side 250 of the cell stack 102 and a second side 256 of the cell stack 102 to produce water 260.

Embodiments provide a shutdown method for a water electrolysis cell stack for use on shut down of the cell stack, even if the cell stack will be resume operation after shut down. In embodiments, the recirculation pump can be run (e.g., to pump water through the cell stack) for any select amount of time, for example an amount of time correlated to an amount of free combustible gas remaining in the cell stack at the time of shut down. The time for running the recirculation pump however should also be limited so as to prevent damage to the cell stack membrane. The time for running the recirculation pump should also be correlated to a pressure in either the cathode or anode. For example, running the pump for too long could cause the cathode side pressure to drop relative to the anode side and any generated oxygen could go directly into the cathode when the system is restarted.

In certain embodiments, the shutdown method can include electrochemical discharge, for example based on a regular Polymer Electrolyte Membrane (PEM) fuel cell mechanism. In such embodiments, on the fuel side (herein hydrogen fuel is used), a catalyst separates the hydrogens negatively charged electrons from the positively charged protons. The membrane allows the positively charged protons to pass through to the oxygen electrode, but will prevent passing of the negatively charged electrons. The negatively charged electrons are then permitted to flow around the membrane through an external circuit, forming an electrical current. At the oxygen electrode, the negatively charged electrons and positively charged hydrogen ions (protons) combine with oxygen to form water, consuming the remaining hydrogen and oxygen gas in the cell stack to prevent migration of combustible gases to other portions of the system, and to remove the gases from the system prior to maintenance.

In certain embodiments, the shutdown method can include chemical recombination, wherein the hydrogen and oxygen chemically recombine to produce water at the catalyst sites on the electrode surfaces producing heat. This occurs at both the oxygen side and the hydrogen side of the membrane. After performing the shutdown method, embodiments leave the shutdown cell stack in more ideal shutdown condition, in a safer and more inert condition than if shut down traditionally or with a different method. Embodiments may also extend the lifespan of the cell stack and make predicting end of life of the cell stack more accurate.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "controller," "module," or "system." A "controller," "module," or "system" can include one or more portions of one or more separate physical hardware and/or software components that can together perform the disclosed function of the "controller," "module," or "system", or a "controller," "module," or "system" can be a single self-contained unit (e.g., of hardware and/or software). Furthermore, aspects of this disclosure may take the form of a computer program product embodied in one or more computer readable medium(s) having computer readable program code embodied thereon.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A method, comprising:
flushing a cell stack (102) for a predetermined amount of time as a function of an amount of combustible gas remaining in the cell stack (102).

2. The method of claim 1, further comprising:
operating the cell stack (102) for a predetermined amount of time; then
shutting down the cell stack (102) and ceasing operation of the cell stack (102) for a predetermined amount of time.

3. The method of claim 2, wherein flushing occurs after shutting down a cell stack power supply.

4. The method of claim 3, wherein flushing includes continuously pumping water through the cell stack (102) after shutting down the cell stack power supply.

5. The method of claim 4, further comprising;
restarting operation of the cell stack (102) after flushing.

6. The method of claim 5, wherein operating the cell stack (102) includes, performing water electrolysis to generate oxygen gas and hydrogen gas.

7. The method of any preceding claim, wherein flushing further includes purging the cell stack (102) with an inert gas.

8. The method of claim 7, wherein shutting down the cell stack (102) includes:
stopping a flow of power to the cell stack (102), while continuing to power a system controller;
stopping a flow of power to one or more valves providing fluid to the cell stack (102) to return the one or more valves to their biased state, wherein stopping the flow of power to the one or more valves causes a valve controlling a flow of the inert gas to the cell stack (102) to move into its open position to purge the cell stack (102) with the inert gas.

9. The method of claim 7, wherein the inert gas includes nitrogen gas.

10. The method of any preceding claim, wherein flushing includes performing electrochemical discharge on the cell stack (102) to consume free combustible gas in the cell stack (102), wherein the combustible gas is hydrogen gas or oxygen gas.

11. The method of claim 10, wherein performing electrochemical discharge includes:
on a first side of the cell stack (102), catalyzing separation of electrons and protons of hydrogen molecules;
forcing the protons through a membrane to a second side of the cell stack (102) while allowing the electrons to flow around the membrane to the second side of the cell stack (102), forming an electrical current; and
allowing the electrons and the protons to combine with oxygen gas on the second side of the cell stack (102) to produce water.

12. The method of any preceding claim, wherein flushing includes performing chemical recombination on the cell stack (102) to consume free combustible gas in the cell stack (102), wherein the combustible gas includes hydrogen gas and/or oxygen gas.

13. The method of claim 12, wherein performing chemical recombination includes:
allowing the hydrogen gas to combine with oxygen gas on both a first side of the cell stack (102) and a second side of the cell stack (102) to produce water.

14. A system, comprising:
a cell stack (102) configured to perform water electrolysis, the cell stack (102) including an anode and a cathode;
one or more conduits configured to supply fluid to the cell stack (102);
a recirculation pump configured to supply water to the cell stack (102); and
a controller configured to operation of the system, including controlling one or more of:
flow of power to the cell stack (102) (both the anode and the cathode);
flow of fluids to the cell stack (102) via the one or more conduits; and/or
operation of the recirculation pump.

15. The system of claim 14, wherein the controller includes computer readable instructions configured to perform a method, the method comprising:
controlling the flow of power to the cell stack (102), controlling the flow of fluids to the cell stack (102) via the one or more conduits, and controlling operation of the recirculation pump for a predetermined amount of time as a function of an amount of combustible gas remaining in the cell stack (102) to flush the cell stack (102) at shut down of the system.
